# EUROPÄISCHE PATENTSCHRIFT

(11) **EP 0 413 197 B1**
(45) Veröffentlichungstag und Bekanntmachung des Hinweises auf die Patenterteilung: **20.10.1993**
(21) Anmeldenummer: 90114753.8
(22) Anmeldetag: 01.08.1990
(51) Int. Cl.: B60B 33/02

(54) **Lenkrolle für verfahrbare Arbeitsbühnen, Gerüste od.dgl.**
Castor for platforms, scaffoldings or similar
Roulette à pivot pour plate-formes, échafaudages ou similaires

(30) Priorität: 16.08.1989 AT 1942/89
(43) Veröffentlichungstag der Anmeldung: 20.02.1991
(73) Patentinhaber: Wicke GmbH & Co., D-45549 Sprockhövel (DE)
(72) Erfinder: Schlösser, Klaus, D-4630 Bochum (DE)
(74) Vertreter: Buse, Karl Georg, Dipl.-Phys.

(56) Entgegenhaltungen:
- CH-A- 361 379
- FR-A- 1 264 876
- GB-A- 1 102 262
- GB-A- 1 382 806

## Beschreibung

Die Erfindung betrifft eine Lenkrolle für verfahrbare Arbeitsbühnen, Gerüste od. dgl. mit einem Befestigungselement, einer gegenüber diesem um eine senkrechte Achse schwenkbeweglichen, an einer Lagerschale des Befestigungselementes abgestützten Rollengabel und einem daran gehalterten, um eine horizontale Achse drehbaren Laufrad, wobei die das Laufrad lagerende Achse horizontale Schlitze der Rollengabel durchgreift und in einen an der Rollengabel schwenkbar gelagerten Fußschalthebel eingreift, der mit die horizontalen Schlitze überlappenden Führungsschlitzen die Achse des Laufrades umgreift, das mittels des Fußschalthebels in eine einen Nachlauf aufweisende Fahrstellung einerseits und in eine an einer die Rollengabel durchquerenden Bremslasche andrückbare Feststellage andererseits überführbar ist.

Bei einer aus der DE-OS 34 26 443 bekannten Lenkrolle der vorgenannten Art ist als Befestigungselement der Lenkrolle an einem Gerüst oder einer Arbeitsbühne ein zapfenförmgiges Befestigungselement vorgesehen ist, das mit einer äußeren und inneren Lagerschale fest verbunden ist, zwischen die unter Zwischenschaltung von Kugelkränzen der Rücken einer Rollengabel faßt. An den Schenkeln dieser Rollengabel ist ein die Rollengabelschenkel übergreifender Fußschalthebel gelagert, der in seinen Hebelschenkeln jeweils einen steuerkurvenartigen Führungsschlitz aufweist, der die das Laufrad lagernde Achse formschlüssig umfaßt. Diese Führungsschlitze des Fußschalthebels überlappen einen in jedem Schenkel der Rollengabel angeordneten horizontal verlaufenden Schlitz, in welchem die Achse des Laufrades derart abgestützt ist, daß das Laufrad einerseits in eine einen Nachlauf aufweisende Fahrstellung und andererseits in eine unterhalb der Achsmitte des Befestigungselementes angeordnete Feststellage überführbar ist. Die Feststellung des Laufrades erfolgt durch eine die Rollengabel durchquerende und an deren beiden Gabelschenkeln befestigte Bremslasche, gegen welche die Umfangsfläche des Laufrades andrückbar ist. Bei dieser Lösung erfolgt während der Verschiebebewegung des Laufrades keine Hubbewegung der Rollengabel, um das Laufrad von seiner Fahrstellung in die Feststellage und umgekehrt zu überführen. Allerdings ist bei dieser bekannten Lenkrolle während ihrer Feststellage im Schwenklager ein fertigungsbedingtes Spiel wirksam, das sich insbesondere bei hohen Arbeitsbühnen oder Gerüsten nachteilig im oberen Bereich der Arbeitsbühne bzw. des Gerüstes auswirkt.

Die Aufgabe der vorliegenden Erfindung besteht darin, eine Lenkrolle der eingangs genannten Art dahingehend zu verbessern, das im Schwenklager fertigungsbedingte Spiel in Feststellage der Lenkrolle wirkungslos zu stellen. Diese Aufgabe wird erfindungsgemäß durch die Merkmale des kennzeichnenden Teiles von Anspruch 1 gelöst. Dadurch ist eine kraftschlüssige, spielfreie Verbindung im Feststellfall zwischen dem Befestigungselement, der damit fest verbundenen Lagerschale und dem Laufrad selbst über die Bremslasche hergestellt. Dabei ergibt sich ebenfalls außer der Feststellung des Laufrades auch eine Blockierung der Schwenkbewegung in Feststellage. Ein weiterer Vorteil ist darin zu sehen, daß in Feststellage auch die Laufradachse entlastet ist, und die blockierte Rolle eine höhere Traglast aufnehmen kann.

Aus statischen Gründen und zur Erzielung einer geführten Ausweichbewegung weist die Bremslasche vorteilhaft einen rechteckigen Querschnitt auf und greift mit beiden Enden in etwa vertikal verlaufende Langlöcher in den Seitenschenkeln der Rollengabel ein.

Um einerseits eine sichere Feststellage auch dann noch zu gewährleisten, wenn die Lauffläche des Laufrades bereits etwas abgeschlissen ist,und um andererseits ein ausreichend großes Haltemoment zur Feststellung der Schwenkbewegung erzeugen zu können, sind die Langlöcher zur Aufnahme der Bremslasche vorzugsweise geringfügig außerhalb der Mittelachse des Befestigungselementes angeordnet.

Die Lenkrolle kann dabei so ausgebildet sein, daß die Bremslasche unmittelbar zwischen der Lagerschale und der Lauffläche des Laufrades angeordnet ist, so daß bei Überführung des Laufrades in eine unterhalb der Achsmitte des Befestigungselementes befindliche Lage eine unmittelbare Beaufschlagung der Bremslasche durch die Lauffläche des Laufrades selbst einerseits und die Lagerschale des Befestigungselementes andererseits erfolgt. Bei dieser Lösung greift der Rücken der Rollengabel unter Zwischenschaltung zweier Kugellaufkränze zwischen eine äußere und innere Lagerschale, die fest mit dem Befestigungselement verbunden sind. Um jedoch auch Lösungen zu ermöglichen, bei denen die Rollengabel nicht integrierter Bestandteil des Schwenklagers ist, sondern als separater Bauteil daran befestigt werden kann, ist nach einem weiteren Ausgestaltungsmerkmal der Erfindung die Rollengabel mit einem Lagerteller verschraubt, der in ein mit dem Befestigungselement verbundenes, die Lagerschale aufweisendes Schwenklager faßt, wobei die Verbindungsschrauben ein gabelseitiges Widerlager für die Bremslasche bilden, sowie zwischen Bremslasche und Lagerschale des Befestigungselementes ein den Rücken der Rollengabel und den Lagerteller durchdringender Andruckbolzen geschaltet ist.

Eine axiale Festlegung der Bremslasche wird vorteilhaft erzielt, indem die Bremslasche durch daran festgelegte Vorsprünge in ihrer Axialrichtung an der Rollengabel festgelegt ist. Dabei können diese Vorsprünge vorteilhaft durch in der Bremslasche den Innenseiten der Gabelschenkel benachbart festgelegte Spannstifte gebildet sein.

Die Feststellung der Lenkrolle erfolgt durch die Betätigung des Fußschalthebels, wodurch das Laufrad in seine Feststellage verschoben wird. Dabei läßt sich der an der Radgabel gelagerte Fußschalthebel einarmig ausbilden, so daß bei Überführung des Laufrades in seine Feststellage der Fußschalthebel niedergedrückt wird. Zur Lösung ist ein derartig einarmiger Fußschalthebel hochzuziehen. Um jedoch den Bedienungskomfort zu erleichtern und sowohl zur Überführung des Laufrades in die Feststellage als auch in die Loslage jeweils eine vertikal nach unten gerichtete Kraft zu benutzen, ist der Fußschalthebel vorteilhaft doppelarmig zur Bildung zweier Betätigungsarme ausgebildet.

Die Erfindung ist in Ausführungsbeispielen auf der Zeichnung dargestellt und wird nachfolgend näher erläutert. Es zeigen:
- Fig. 1: eine Lenkrolle in aufgebrochener Seitenansicht, bei der ein einarmiger Fußschalthebel Verwendung findet und die Bremslasche unmittelbar zwischen Laufrad und Lagerschale angeordnet ist,
- Fig. 2: die aus Fig. 1 ersichtliche Lenkrolle in einem Teilschnitt in Laufrichtung gesehen,
- Fig. 3: ein weiteres Ausführungsbeispiel der Lenkrolle in einer aufgebrochenen Seitenansicht analog Fig. 1, bei welcher ebenfalls ein einarmiger Fußschalthebel Verwendung findet, jedoch zwischen Bremslasche und Lagerschale ein Andruckbolzen geschaltet ist,
- Fig. 4: die aus Fig. 3 ersichtliche Lenkrolle in einer teilweisen Schnittdarstellung in Laufrichtung gesehen,
- Fig. 5: ein weiteres Ausführungsbeispiel einer Lenkrolle, die in ihrer Feststelleinrichtung Fig. 1 entspricht, jedoch einen zweiarmigen Fußschalthebel besitzt.
- Fig. 6: die mit einer Blattfeder als Anschläge versehene Bremslasche in einer perspektivischen Ansicht.

Zunächst sei darauf hingewiesen, daß in den Zeichnungen nur diejenigen Teile einer Lenkrolle dargestellt sind, die für das Verständnis der Erfindung von Bedeutung sind. So fehlen insbesondere Einzelheiten über die mittels einer solchen Lenkrolle verfahrbaren Gegenstände, wie Arbeitsbühnen, Gerüste oder dergleichen und es fehlen auch spezielle Ausgestaltungen der Befestigungselemente, die andersartig als das dargestellte Befestigungselement ausgebildet und an den jeweiligen Bedarfsfall angepaßt sein können. Im übrigen gilt, daß alle in den Zeichnungen fehlenden Teile der Lenkrolle oder der mit dieser zusammenwirkenden Geräte einen an sich bekannten Aufbau haben können. Die aus der Zeichnung ersichtliche Lenkrolle weist ein Laufrad 10 bekannter Ausbildung auf, das von einer Rollengabel 11 aufgenommen wird. Das Laufrad 10 ist auf eine Achse 12 unter Zwischenschaltung einer Lagerhülse 13 lose drehbar angeordnet. Dabei kann es sich bei der Achse 12 um eine Kopfschraube handeln, die zusammen mit einer Mutter das Laufrad 10 an der Rollengabel 11 befestigt.

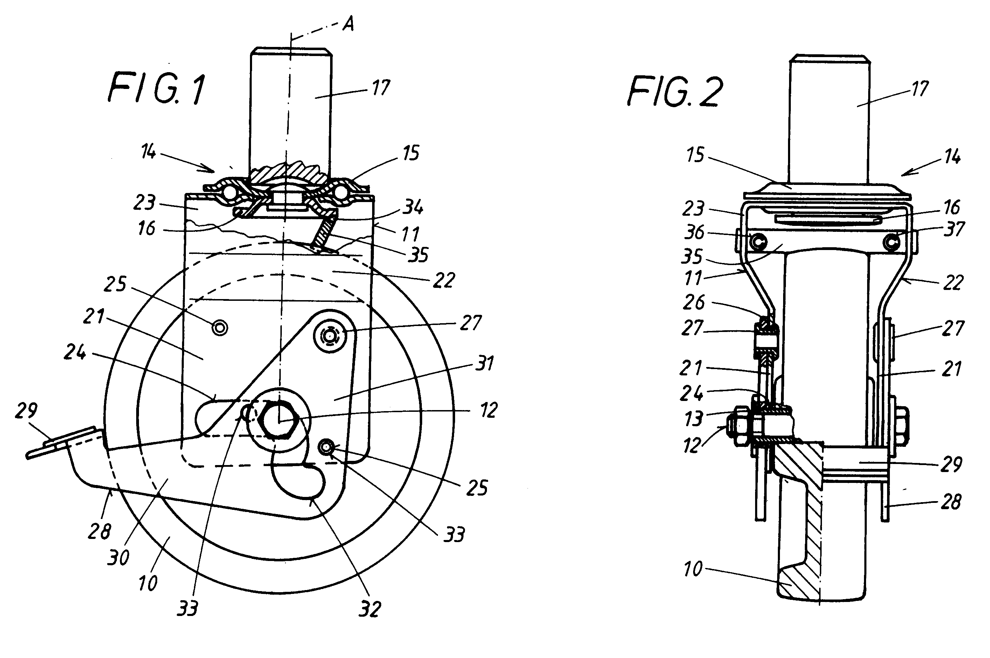

Bei den aus den Figuren 1, 2 und 5 ersichtlichen Ausführungsbeispielen ist der Gabelrücken der Rollengabel 11 integrierter Bestandteil eines eine senkrechte Mittelachse aufweisenden Schwenklagers 14. Dieses Schwenklager umfaßt eine den Gabelrücken übergreifende Außenschale 15 und eine in die Gabelhöhlung eingreifende Lagerschale 16. Zwischen dem Gabelrücken einerseits und der Außenschale 15 befindet sich wenigstens ein wälzlagerbildender Kugelkranz. An die mit der Lagerschale 16 beispielsweise über einen Niet fest verbundene Außenschale 15 schließt sich ein als Befestigungselement 17 dienender Zapfen an, der beispielsweise mit der Außenschale 15 verschweißt sein kann. Dieses Befestigungselement kann der Anbringung an einem Gerät, wie einer Arbeitsbühne, einem Gerüst oder dergleichen in bekannter, daher nicht dargestellter Weise dienen.

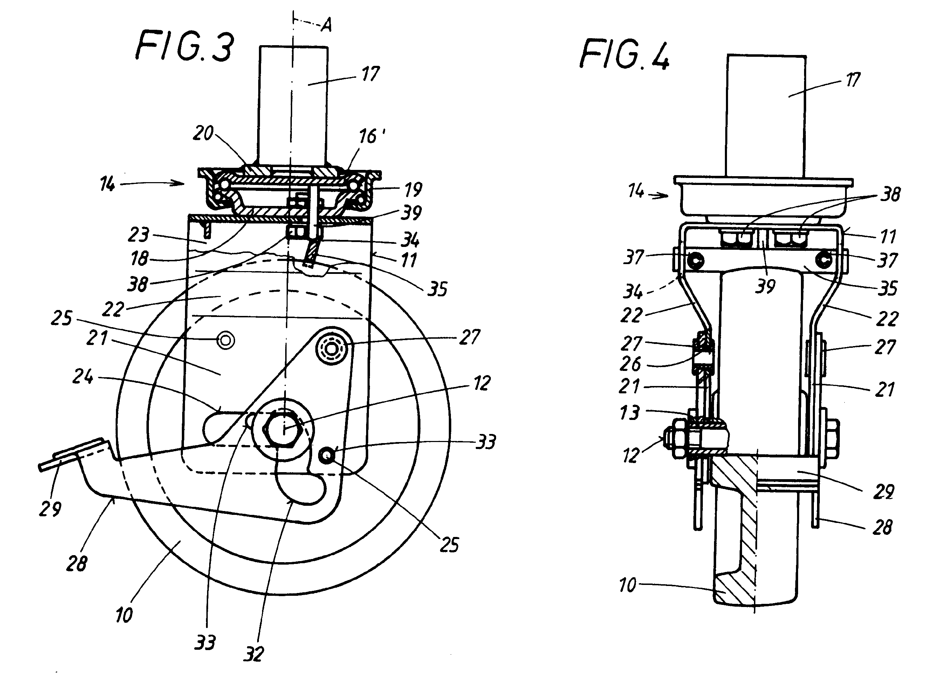

Bei dem aus den Figuren 3 und 4 ersichtlichen Ausführungsbeispiel weist das Schwenklager 14 einen anderen Aufbau auf, und besteht aus einem unteren, zwischen zwei Kugelkränze fassenden Lagerteller 18, eine diesen übergreifende Lagerschale 16',mit welcher ein den Randbereich des Lagertellers 18 unterfassender Kragenring 19 beispielsweise durch Verschweißung fest verbunden ist. Die Lagerschale 16' ist in ihrem Zentrum mit einer Ringscheibe 20 fest verbunden, mit welcher das zapfenförmige Befestigungselement 17 beispielsweise ebenfalls durch Verschweißung fest verbunden ist. Die Rollengabel 11 ist in ihrem Querschnitt im wesentlichen als U-förmiger Körper ausgebildet, dessen beide Schenkel 21 über schräge Verlängerungen 22 und Schenkelenden 23 in den quer dazu verlaufenden Gabelrücken übergehen. In jedem der beiden Schenkel 21 ist ein horizontal verlaufender Schlitz 24 angeordnet, der in bekannter Weise an seinem einen Ende in einen nach oben geringfügig erweiterten Endbereich übergehen kann. Auf der Außenseite jeden Schenkels 21 sind im Abstand und diagonal zueinander Vorprägungen 25 vorgesehen. Ferner weist jeder Schenkel 21 der Rollengabel eine Lagerbohrung 26 auf, in welcher eine Lagerhülse 27 zur Aufnahme eines Fußschalthebels 28 angeordnet ist. Der Fußschalthebel 28 besteht aus zwei die Rollengabel 11 außenseitig übergreifenden Schenkeln, die bei den Ausführungsbeispielen gemäß den Figuren 1 bis 4 auf einer Seite des Laufrades durch eine Trittplatte 29 überbrückt sind. Wie aus den Figuren 1 und 3 entnommen werden kann, sind die Schenkel eines jeden Fußschalthebels 28 etwa L-förmig gestaltet, d.h., daß jeder Schenkel des Fußschalthebels 28 aus einem verhältnismäßig schmalen vorderen Bereich 30 besteht, der in einen winklig dazu angeordneten verbreiterten Bereich 31 übergeht. An der Übergangsstelle zwischen den Bereichen 30 und 31 liegt ein Führungsschlitz 32 in jedem Schenkel des Fußschalthebels 28. Diese Führungsschlitze weisen etwa eine S-förmige Gestalt auf, wobei die gekrümmten Endbereiche des Führungsschlitzes 32 durch einen Mittelbereich miteinander verbunden sind. An den Übergangsstellen der Endbereiche des Führungsschlitzes 32 mit dessen Mittelbereich sind Vorsprünge vorgesehen, die in den beiden Endlagen des Fußschalthebels eine Arretierung für die die Achse 12 umgebende Lagerhülse 13 bilden, indem sie durch Zusammenwirken mit der Achse 12 ein ungewolltes Verschieben derselben innerhalb der horizontalen Schlitze 24 der Schenkel 21 der Rollengabel 11 verhindern. Auf unterschiedlichen Seiten der Führungsschlitze 32 sind glatte Durchbrüche 33 im Fußschalthebel angeordnet, derart, daß sie in den Endlagen des Laufrades mit den Vorprägungen 25 an der Außenseite der Schenkel 21 der Rollengabel 11 zusammenwirken. Dabei kommt in jeder Endlage nur ein Durchbruch 33 mit einer Vorprägung 25 zum Eingriff.

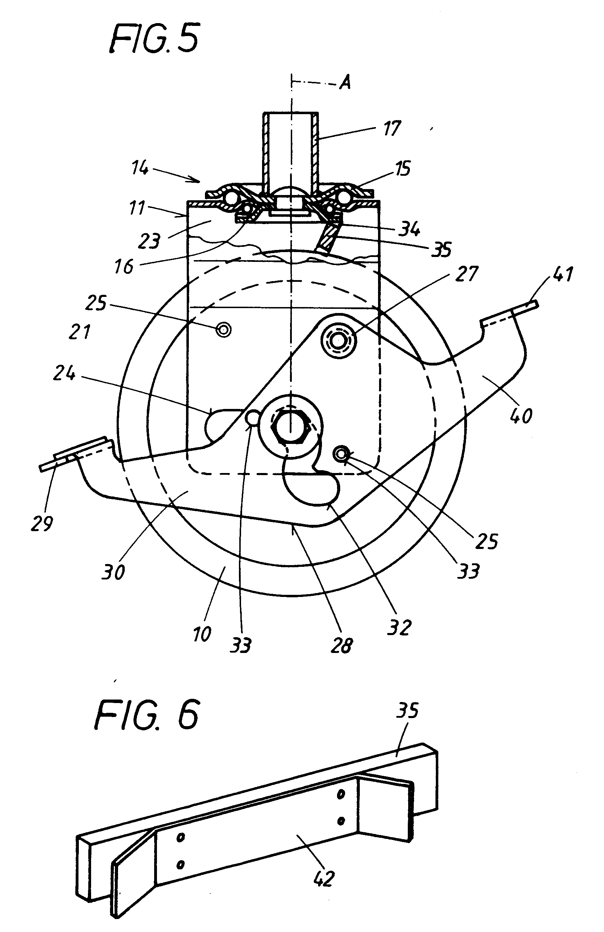

Bei den aus den Zeichnungen ersichtlichen Ausführungsbeispielen sind sämtliche Lenkrollen in Feststellage des Laufrades 10 und des Schwenklagers 14 dargestellt. Etwas außerhalb der Achsmitte A des Befestigungselementes 17 ist in den Schenkelenden 23 der Rollengabel 11 jeweils ein sich in etwa vertikaler Richtung jedoch etwas aus der Senkrechten geneigt erstreckendes Langloch 34 angeordnet. In diese Langlöcher greifen die Enden einer im Querschnitt rechteckförmigen Bremslasche 35 ein, wobei die Langlöcher 34 jeweils etwas länger als die Breite der Bremslasche 35 sind, jedoch mit deren Dicke etwa übereinstimmen. An ihren beiden Endbereichen weist die Bremslasche 35 jeweils einen Vorsprung 36 und 37 auf, die beispielsweise durch in Bohrungen der Bremslasche 35 eingetriebene Spannstifte gebildet sein können, wobei diese Vorsprünge 36 und 37 den jeweiligen Innenseiten der Schenkelenden 23 benachbart sind um die Bremslasche 35 in ihrer Axialrichtung zu arritieren. Statt Spannstiften lassen sich für die Vorsprünge 36 und 37 auch Spannhülsen verwenden, wie dies beispielsweise aus Figur 2 ersichtlich ist. Bei den aus den Figuren 1, 2 und 5 ersichtlichen Ausführungsbeispielen ist der Höhenabstand zwischen dem oberen Umfangspunkt des Laufrades 10 und der Unterseite der Lagerschale 16 derart gewählt, daß bei Überführung des Laufrades 10 in die aus den Figuren 1 und 5 ersichtlichen Lage ein Andrücken der Bremslasche 35 einerseits an die Lagerschale 16 und anderseits an die Lauffläche des Laufrades 10 gewährleistet ist. Sobald nun entgegen der aus Figur 1 ersichtlichen Darstellung der Fußschalthebel 28 nach oben verschwenkt wird und dadurch eine horizontal Verschiebung des Laufrades 10 nach links in eine Freigabelage erfolgt, fällt die Bremslasche 35 aufgrund ihres Eigengewichtes bis auf die untere Begrenzungsfläche des Langloches 34 zurück, so daß außer dem Laufrad 10 auch die Lagerschale 16 freigegeben ist.

Bei dem aus den Figuren 3 und 4 ersichtlichen Ausführungsbeispiel ist die Rollengabel 11 mittels ihres Gabelrückens an dem Schwenklager 14 beispielsweise durch Verbindungsschrauben 38 befestigt. In der dargestellten Feststellage wird durch das Laufrad 10 die Bremslasche 35 gegen die Verbindungsschrauben 38 gepresst, zwischen denen ein Andruckbolzen 39 angeordnet ist, der im Feststellfall ausgelöst durch das Laufrad 10 über die Bremslasche 35 gegen die Lagerschale 16' gedrückt wird, so daß dadurch neben einer Festlegung des Laufrades 10 auch eine Sperrung der Schwenkbewegung der Lenkrolle erfolgt. Dieser in vertikaler Richtung bewegbare Andruckbolzen 39 durchdringt Führungsbohrungen im Rücken der Rollengabel 11 und im Lagerteller 18.

Das aus Figur 5 ersichtliche Ausführungsbeispiel entspricht in Aufbau und Funktionsweise im wesentlichen dem aus den Figuren 1 und 2 ersichtlichen Ausführungsbeispiel. Im Unterschied dazu ist jedoch der Fußschalthebel 28 zweiarmig ausgebildet und weist außer seinem als vorderen Bereich bezeichneten Betätigungsarm 30 einen sich zur anderen Seite der Lagerbohrung 26 hin erstreckenden,zweiten Betätigungsarm 40 auf. Während die beiderseits der Rollengabel angeordneten Betätigungsarme 30 durch die im Sperrsinne niederdrückbare Trittplatte 29 verbunden sind, sind die sich in Verlängerung der Betätigungsarme 30 erstreckenden beiden Betätigungsarme 40 ebenfalls durch eine Trittplatte 41 miteinander verbunden, wobei jedoch diese Trittplatte 41 beim Niedertreten die Überführung des Laufrades 10 in seine Fahrstellung bewirkt.

Wie bereits erwähnt, sind die dargestellten Ausführungsformen nur beispielsweise Verwirklichungen der Erfindung die keinesfalls allein darauf beschränkt ist. Es sind vielmehr noch mancherlei andere Ausführungsformen und Ausgestaltungen möglich. Überdies sind alle in der Beschreibung erwähnten und/oder in der Zeichnung dargestellten neuen Merkmale erfindungswesentlich, auch wenn sie mit Ansprüchen nicht ausdrücklich beansprucht sind.

So ist es beispielsweise zur Vereinfachung der Fertigung und Montage möglich, die Vorsprünge zur axialen Lagesicherung der Bremslasche 35 aus einer an dieser - beispielsweise durch Widerstandsschweißung - befestigten Blattfeder 42 zu bilden, die sich nach dem Einschieben durch die Langlöcher 34 in den Schenkelenden 23 abspreizt.

### Bezugszeichenliste :

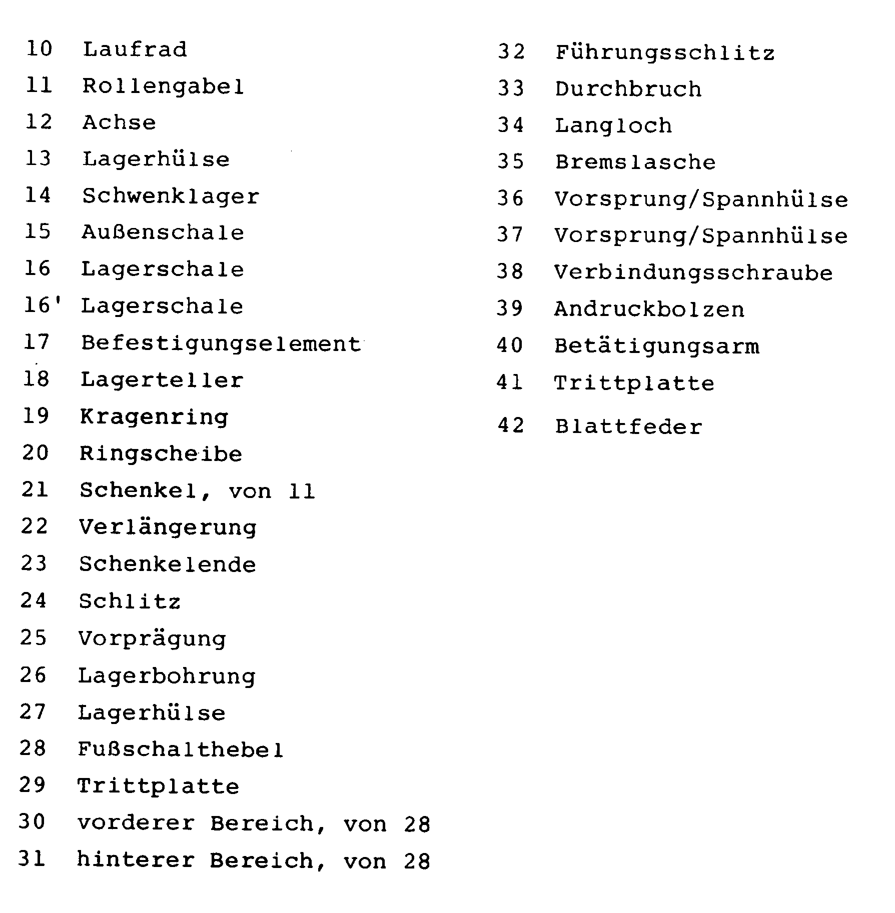

## Patentansprüche

1. Lenkrolle für verfahrbare Arbeitsbühnen, Gerüste od.dgl. mit einem Befestigungselement (17), einer gegenüber diesem um eine senkrechte Achse (A) schwenkbeweglichen, an einer Lagerschale (16,16') des Befestigungselementes (17) abgestützten Rollengabel (11) und einem daran gehalterten, um eine horizontale Achse drehbaren Laufrad (10), wobei die das Laufrad lagernde Achse (12) horizontale Schlitze (24) der Rollengabel (11) durchgreift und in einen an der Rollengabel (11) schwenkbar gelagerten Fußschalthebel (28) eingreift, der mit die horizontalen Schlitze (24) überlappenden Führungsschlitzen (32) die Achse (12) des Laufrades umgreift, das mittels des Fußschalthebels (28) in eine einen Nachlauf aufweisende Fahrstellung einerseits und in eine an einer die Rollengabel (11) durchquerenden Bremslasche (35) andrückbare Feststellage andererseits überführbar ist,
**dadurch gekennzeichnet,**
daß die Bremslasche (35) in etwa vertikaler Richtung beweglich an der Rollengabel (11) gehaltert ist und infolge des Verschiebebewegung der Achse (12) des Laufrades (10) in die Feststellage einerseits an dem Umfang des Laufrades (10) gedrückt ist und andererseits einen Kraftschluß mit der Lagerschale (16,16') des Befestigungselementes (17) unmittelbar oder mittelbar herstellt.

2. Lenkrolle nach Anspruch 1, dadurch gekennzeichnet, daß die Bremslasche (35) einen Rechteckquerschnitt aufweist und mit beiden Enden in etwa vertikal verlaufende Langlöcher (34) in den Seitenschenkeln der Rollengabel ( 11) eingreift.

3. Lenkrolle nach Anspruch 1 und/oder 2, dadurch gekennzeichnet, daß die Langlöcher (34) zur Aufnahme der Bremslasche (35) geringfügig außerhalb der Mittelachse (A) des Befestigungselementes (17) angeordnet sind.

4. Lenkrolle nach einem oder mehreren der vorhergehenden Ansprüche, dadurch gekennzeichnet, daß die Rollengabel (11) mit einem Lagerteller (18) verschraubt ist, der in ein mit dem Befestigungselement (17) verbundenes, die Lagerschale (16') aufweisendes Schwenklager (14) faßt, wobei die Verbindungsschrauben (38) ein gabelseitiges Widerlager für die Bremslasche (35) bilden, sowie zwischen Bremslasche (35) und Lagerschale (16') des Befestigungselementes (17) ein den Rücken der Rollengabel ( 11) und den Lagerteller (18) durchdringender Andruckbolzen (39) geschaltet ist.

5. Lenkrolle nach einem oder mehreren der vorhergehenden Ansprüche, dadurch gekennzeichnet, daß die Bremslasche (35) durch daran festgelegte Vorsprünge (36,37) in ihrer Axialrichtung an der Rollengabel (11) festgelegt ist.

6. Lenkrolle nach Anspruch 5, dadurch gekennzeichnet, daß die Vorsprünge durch in der Bremslasche (35) den Innenseiten der Gabelschenkel ( 21 ) benachbart festgelegte Spannstifte (36,37) gebildet sind.

7. Lenkrolle nach einem oder mehreren der vorhergehenden Ansprüche, dadurch gekennzeichnet, daß der Fußschalthebel (28') doppelarmig zur Bildung zweier Betätigungsarme (30,40) ausgebildet ist.

8. Lenkrolle nach Anspruch 5, dadurch gekennzeichnet, daß die Vorsprünge durch an der Bremslasche (35) den Innenseiten der Gabelschenkel (21) benachbart befestigte Blattfedern (42) gebildet sind.

## Claims

1. A caster for mobile working platforms, scaffolding or the like, comprising a fixing element (17), a wheel fork (11) supported on a bearing shell (16, 16') of the fixing element (17) and adapted for pivoting movement about a vertical axis (A) in relation to the fixing element (17), and comprising a wheel (10) supported on the wheel fork (11) and rotatable about a horizontal axis, the axle (12) mounting the wheel traversing horizontal slots (24) in the wheel fork (11) and engaging a foot-operated shift lever (28) which is pivotably mounted on the wheel fork (11) and which has, overlapping the horizontal slots (24), guide slots (32) which engage around the axle (12) of the wheel, which can on the one hand be moved into a travelling position with a trailing action by means of the foot-operated shift lever (28) and on the other into a locked position, in which pressure is applied to a brake pull rod (35) traversing the wheel fork (11), characterised in that the brake pull rod (35) is mounted on the wheel fork (11) and is on the one hand movable in a substantially vertical direction and is pressed into the locked position on the periphery of the wheel (10) as a result of the displacement movement of the axle (12) of the wheel (10) while on the other it directly or indirectly establishes a frictional connection with the bearing shell (16, 16') of the fixing element (17).

2. A caster according to Claim 1, characterised in that the brake pull rod (35) has a rectangular cross-section and has both its ends engaging substantially vertically extending longitudinal holes (34) in the side arms of the wheel fork (11).

3. A caster according to Claim 1 and/or 2, characterised in that the elongated holes (34) for receiving the brake pull rod (35) are disposed slightly outside the central axis (A) of the fixing element (17).

4. A caster according to one or more of the preceding Claims, characterised in that the wheel fork (11) is bolted to a mounting plate (18) which fits into a pivot bearing (14) connected to the fixing element (17) and comprising the bearing shell (16'), the connecting bolts (38) forming on the fork side an abutment for the brake pull rod (35), and in that there is between the brake pull rod (35) and the bearing shell (16') of the fixing element (17) a pressure-applying rod (39) which traverses the back of the wheel fork (11) and the mounting plate (18).

5. A caster according to one or more of the preceding Claims, characterised in that the brake pull rod (35) is fixed in its axial direction on the wheel fork (11) by projections (36, 37) mounted on the brake pull rod (35).

6. A caster according to Claim 5, characterised in that the projections are formed by tensioning rods (36, 37) fixed in the brake pull rod (35) and adjacent the inside faces of the wheel fork arms (21).

7. A caster according to one or more of the preceding Claims, characterised in that the foot-operated shift lever (28') is double-armed in order to form two actuating arms (30, 40).

8. A caster according to Claim 5, characterised in that the projections are formed by leaf springs (42) fixed on the brake pull rod (35) adjacent the inside surfaces of the wheel fork arms (21).

## Revendications

1. Roue à pivot, pour plates-formes de travail, échafaudages déplaçables, ou analogues, avec un élément de fixation (17), une fourche de roue (11), mobile à pivotement par rapport à celui-ci, autour d'un axe vertical (A), prenant appui sur une coquille de palier (16,16') de l'élément de fixation (17), et une roue (10) de déplacement, montée à rotation, autour d'un axe horizontal, sur la fourche de roue (11), l'axe (12) servant de palier à la roue traversant des fentes horizontales (24) de la fourche de roue (11), et s'engageant dans un levier de pédale de manoeuvre (28) monté à pivotement sur la fourche de roue (11) et entourant, par les fentes de guidage chevauchant les fentes horizontales (24), l'axe (12) de la roue que l'on peut amener, au moyen du levier de pédale de manoeuvre (28), d'une part, dans une position de déplacement, permettant une marche à vide et, d'autre part, dans une position de blocage, dans laquelle peut être exercée une pression sur une patte de frein (35) traversant la fourche de roue (11), caractérisée en ce que la patte de frein (35) est maintenue en direction à peu près verticale mobile sur la fourche de roue (11) et, suite au mouvement de déplacement de l'axe (12) de la roue (10), est pressé dans la position de blocage, d'une part sur la périphérie de la roue (10) et d'autre part, de l'élément de fixation (17) établit directement ou indirectement, une adhérence liaison mécanique avec la coquille de palier (16,16').

2. Roue à pivot selon la revendication 1, caractérisée en ce que la patte de frein (35) présente une section transversale rectangulaire et s'engage par les deux extrémités dans des trous oblongs (34), de profil sensiblement verticale, ménagés dans les branches latérales de la fourche de roue (11).

3. Roue à pivot selon la revendication 1 et/ou 2, caractérisée en ce que les trous oblongs (34) pour recevoir la patte de frein (35) sont légèrement décalés par rapport à l'axe médian (A) de l'élément de fixation (17).

4. Roue à pivot selon l'une des revendications précédentes, caractérisée en ce que la fourche de roue (11) est vissée à une assiette de palier (18), maintenant le palier de pivotement (14) présentant la coquille de palier (16') et relié à l'élément de fixation (17), les vis de liaison (38) formant un contre-appui, côté fourche, pour la patte de frein (35), et qu'entre la patte de frein (35) et la coquille de palier (16') de l'élément de fixation (17) est mis en oeuvre un boulon de pressage (39) traversant le dos de la fourche de roue (11) et l'assiette de palier (18).

5. Roue à pivot selon l'une des revendications précédentes, caractérisée en ce que la patte de frein (35) est fixée en direction axiale sur la fourche de roue (11) au moyen de saillies (36,37) fixées à la patte.

6. Roue à pivot selon la revendication 5, caractérisée en ce que les saillies sont formées par des goupilles de serrage (36,37) fixées dans la patte de frein (25), au voisinage des faces intérieures de la branche de fourche (21).

7. Roue à pivot selon l'une des revendications précédentes, caractérisée en ce que le levier de pédale de manoeuvre (28') est à deux bras, en vue de former deux bras moteurs (30,40).

8. Roue à pivot selon la revendication 5, caractérisée en ce que les saillies sont formées par des ressorts à lame (42), fixés sur la patte de frein (35), au voisinage des faces intérieures des branches de fourche (21).
